# EUROPEAN PATENT APPLICATION

(11) **EP 1 557 445 A2**
(43) Date of publication of application: **27.07.2005**
(21) Application number: 05103761.2
(22) Date of filing: 04.05.2005
(51) Int. Cl.: C08L 77/10, C08L 51/06, C08L 23/16, C08L 23/02, C08L 23/06

(54) **Impact modified polyamide compositions**

(71) Applicant: Solvay Advanced Polymers, L.L.C., Alpharetta, GA 30005-3914 (US)
(72) Inventor: Bushelman, Corinne, 30040, Cumming (US)
(74) Representative: Jacques, Philippe

(57) **Abstract**

Polymer composition, comprising
- at least one aromatic polyamide,
- at least one first elastomer comprising (i) recurring units derived from at least one acyclic olefin (O1) which comprises at most 4 carbon atoms, and (ii) recurring units derived from at least one acyclic olefin (O2) which comprises more than 6 carbon atoms, and
- at least one second elastomer and comprising recurring units derived from at least one acyclic olefin (O3) which comprises at most 4 carbon atoms, wherein the second elastomer is free of recurring units derived from an acyclic olefin which comprises more than 6 carbon atoms.

Shaped article manufactured from the polymer composition.

## Description

### FIELD OF THE INVENTION

The invention relates to polymer compositions, especially to impact-modified aromatic polyamides compositions comprising elastomers which may be functionalized, notably, through reactive extrusion. Maleic anhydride functionalized elastomeric ethylene copolymers are included within the elastomers useful in the invention. Aromatic polyamides may include aromatic polyamides such as AMODEL® polyamides, available from SOLVAY ADVANCED POLYMERS, L.L.C.

The invention also relates to a process for producing a film comprising the invented polymer composition and having improved surface quality and impact resistance. The use of the invention compositions for preparing articles, moldings, films, fibers and containers etc., is also a part of the invention.

Additional advantages and other features of the present invention will be set forth in part in the description that follows and in part will become apparent to those having ordinary skill in the art upon examination of the following or may be learned from the practice of the present invention. The advantages of the present invention may be realized and obtained as particularly pointed out in the appended claims. As will be realized, the present invention is capable of other and different embodiments, and its several details are capable of modifications in various obvious respects, all without departing from the present invention. The description is to be regarded as illustrative in nature, and not as restrictive.

### BACKGROUND OF THE INVENTION

Polymer compositions are well known and have many uses including, for example, parts manufacturing, injection molding, film processing, thermoforming, extrusion, blow molding, etc. Polymer compositions have found extensive use in packaging applications including films and containers such as bottles, resealable packaging and the like. Polymer films and containers may be used to transiently package goods during shipment or may be used as an integral and permanent part of a device such as the packaging for an electronic component. There is a need for new polymer compositions that provide useful properties in the areas of extrusion, lamination and film forming.

The extrusion performance of a polymeric material is an important factor in determining whether or not a particular polymer-containing composition may be practically or commercially useful. For example, the melt characteristics of a polymer composition can strongly influence whether the polymer composition is suitable for certain film extrusion or molding applications. Advantageously, compositions have excellent properties in drawability, flexibility, mechanical strength, melt stability, recyclability, transparency and coatability in order to be considered for film applications. Properties such as barrier properties (e.g., resistance to ingress and/or egress of certain gases), stain resistance characteristics may also be very important.

While many polymer-containing compositions exist, few, if any, have excellent chemical and mechanical properties and are able to provide good extrusion performance to provide commercially useful films.

Ethylene vinyl alcohol polymers have been extensively used as films in packaging applications. Such films have certain drawbacks including the necessity to use multilaminate structures to provide an acceptable balance of mechanical and gas permeation properties. A resin composition that provides improved mechanical characteristics such as flexibility, processability (e.g., including melt stability), tear strength and impact resistance, in combination with good extrusion performance may provide significant benefits over existing packaging films.

The ultimate thickness of a film is an important consideration in selecting a polymer composition for a packaging or film application. By minimizing film thickness a lesser amount of polymer composition is required thereby resulting in reduced material costs and lower environmental load. Polymer compositions exhibiting improved melt strength may be more resistant to pin-hole formation and result in a lower defect rate in comparison to conventional polymer compositions for film-extrusion applications and may thus permit the use of thinner films.

Aliphatic polyamides such as those derived from the polycondensation reaction of aliphatic diamines and dicarboxylic acids are well known. Aliphatic polyamides have been widely used in applications such as fibers and textiles. Although widely used, aliphatic polyamides are usually not able to provide the full degree of thermal and chemical resistance required in specialty applications.

Partially or wholly aromatic polyamides are derived from the polycondensation reaction of aromatic dicarboxylic acids and/or aromatic diamines. Unlike aliphatic polyamides, aromatic polyamides provide usually very high thermal resistance and very good mechanical properties. For example, aromatic polyamides have substantially higher melting points and improved mechanical characteristics such as impact resistance and stiffness in comparison to their aliphatic counterparts. However, the application of aromatic polyamides for preparing films has been restricted to some degree by the lack of readily available polyamide compositions to provide films having acceptable mechanical properties such as impact resistance, tear strength and melt processability.

Maleated polyolefins have been described as modifiers in terephthalic acid-containing polyamides in EP 0291796. Partially aromatic polyamides containing one modifier are described in U.S. 6,518,341. None of the afore-mentioned patents addresses the problem of film formation using aromatic polyamide compositions. Besides, none of the afore-mentioned patents describes a polymer composition containing an aromatic polyamide and two different elastomers.

### SUMMARY OF THE INVENTION

The present invention addresses the needs noted above as well as the problems of the prior art, and provides polymer compositions comprising at least one aromatic polyamide and at least two elastomers of a specific type.

More precisely, the polymer composition according to the invention comprises
- at least one aromatic polyamide,
- at least one first elastomer comprising (i) recurring units derived from at least one acyclic olefin (O1) which comprises at most 4 carbon atoms, and (ii) recurring units derived from at least one acyclic olefin (O2) which comprises more than 6 carbon atoms, and
- at least one second elastomer comprising recurring units derived from at least one acyclic olefin (O3) which comprises at most 4 carbon atoms, wherein the second elastomer is free of recurring units derived from an acyclic olefin which comprises more than 6 carbon atoms.

Preferred elastomers are functionalized and are produced through reactive extrusion. Preferred aromatic polyamides useful herein include aromatic polyamides such as AMODEL® polyamides. The size, shape, surface texture, number and amount of additives, use, etc. of the invention compositions are not limited in any way.

### DETAILED DESCRIPTION OF THE INVENTION

The invention compositions that contain at least one aromatic polyamide and at least two elastomers of specific type may provide improved mechanical and extrusion characteristics in extruded films and extruded or molded articles.

The elastomers may be optionally functionalized with one or more ionic, non-ionic, hydrophilic, hydrophobic and/or reactive groups.

### Polyamide

Polyamides are, generally speaking, polymers containing a repeating amide (CONH) functionality. Typically, polyamides are formed by reacting diamine and diacid monomer units (e.g., nylon 6,6), or by polymerizing an amino carboxylic acid or caprolactam (e.g., nylon 6). Linear, aliphatic polyamides are well known materials.

The invention relates to a polymer composition comprising an aromatic polyamide. The aromaticity of the polyamide may be derived from the diacid and/or from the diamine monomer units.

Preferably, the aromatic polyamide used herein is prepared by polycondensation of one or more diacids and one or more diamines.

### Aromatic Polyamide

"Aromatic polyamide" is intended to denote a polyamide whose content of aromatic group-containing recurring units is more than 15 mole % based on the total number of moles of recurring units. The content of aromatic group-containing recurring units is preferably more than 35 mole % and more preferably more than 50 mole %, based on the total number of recurring units.

Aromatic polyamides suitable for use in the practice of this invention include notably the various linear, thermoplastic, high temperature, partially aromatic polyamides and copolymer analogs thereof, frequently termed partially aromatic nylons, that require high processing temperatures and are thus difficult to melt process without deterioration.

Aromatic polyamides that are crystalline or crystallizable are preferred, and particularly preferred are the crystalline or semi-crystalline, high temperature polyamides comprising terephthalamides of aliphatic diamines. Such aromatic polyamides may comprise as structural units terephthalamides of one or more C₄-C₁₄ aliphatic diamines such as hexamethylene diamine or the like, including diamines having one or more C₁-C₄ alkyl substituents attached to the hydrocarbon portion. In addition to the terephthalamide units, these aromatic polyamides may further comprise as structural units one or more additional diamides of such aliphatic diamines, for example diamides derived from aromatic dicarboxylic acids or related compounds such as isophthalic acid, naphthalene dicarboxylic acid or the like, as well as diamides derived from aliphatic diamines and C₄-C₁₄ aliphatic dicarboxylic acids or related compounds such as diamide units derived from adipic acid, sebacic acid, cyclohexane dicarboxylic acid and similar dicarboxylic acids.

A variety of aromatic polyamides comprising terephthalamide units are known in the art, and aromatic copolyamides comprising a combination of hexamethylene terephthalamide units and hexamethylene adipamide units, optionally including hexamethylene isophthalamide units, are known.

In greater detail, the aromatic polyamide of the invented compositions may be a polyamide comprising polymerized aliphatic diamine terephthalamide units which may be further described as represented by the following structural formula : 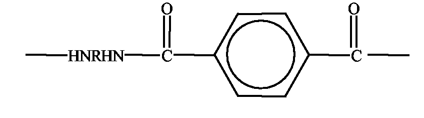 wherein R comprises at least one aliphatic hydrocarbyl radical.

Preferably, aliphatic radicals R in the above formula will comprise at least one C₄-C₁₄ aliphatic hydrocarbyl radical, more particularly, at least one straight chain, branched or cyclic, substituted or unsubstituted aliphatic radical having from about 4 to about 14 carbon atoms. Polyamides comprising such radicals exhibit usually good crystallinity and desirable high temperature properties, together with melting and thermal degradation temperatures making them well suited for melt processing and fabricating in injection molding and extrusion operations. Specific examples of suitable aliphatic radicals include tetramethylene, hexamethylene, dodecamethylene and the like, as well as their alkyl-substituted analogs such as 2-methylpentamethylene, 2,4-dimethylhexamethylene and the like, and cyclic analogs such as p-cyclohexyl and the like. Most preferably, R in the formula comprises a hexamethylene radical, either alone or as mixture with additional aliphatic 4 to 14 carbon atom radicals. The preferred aromatic polyamide will have a melting point of at least about 270°C; still more preferred are polyamide components melting at about 290°C to about 330°C.

A preferred aromatic polyamide is chosen from the class of PMXDA polyamides. For the purpose of the present invention, PMXDA is intended to denote a polyamide of which more than 50 mole % of the recurring units are formed by the polycondensation reaction between at least one aliphatic diacid and an aromatic diamine, in particular metaxylylene diamine. Suitable PMXDAs are commercially available as IXEF® PMXDAs from Solvay Advanced Polymers, L.L.C..

Another preferred aromatic polyamide is chosen from the class of the polyphthalamides (PPA). The polyphthalamides are defined as aromatic polyamides of which more than 50 mole % of the recurring units are formed by the polycondensation reaction between at least one phthalic acid and at least one diamine. Phthalic acid includes any one of ortho-phthalic acid, isophthalic acid, terephthalic acid, and mixtures thereof.

The diamine is advantageously an aliphatic diamine (such as for example : hexa- methylenediamine, nonanediamine, 2-methyl-1,5 pentadiamine, and 1,4-diaminobutane), preferably a C₃-C₁₂ aliphatic diamine, more preferably a C₆-C₉ aliphatic diamine, and still more preferably hexa-methylenediamine.

Suitable polyphthalamides are commercially available as AMODEL® polyphthalamides from Solvay Advanced Polymers, L.L.C.

Within the class of PPA, a first family of preferred polyphthalamides are the polyterephthalamides. Polyterephthalamides are defined as aromatic polyamides of which more than 50 mole % of the recurring units are formed by the polycondensation reaction between terephthalic acid and at least one aliphatic diamine.

A first group of preferred polyterephthalamides includes polyterephthalamides the recurring units of which are formed by the polycondensation reaction of terephthalic acid and at least one aliphatic diamine.

A second group of preferred polyterephthalamides includes polyterephthalamides the recurring units of which are formed by polycondensation reaction of terephthalic acid, isophthalic acid and at least one aliphatic diamine.

Within this second group, the mole content of the terephthalamide recurring units (based on the total number of moles of recurring units) is preferably 60 mole % or more, more preferably 65 mole % or more. The mole content of the terephthalamide recurring units is advantageously 90 mole % or less, preferably 80 mole % or less, more preferably about 70 mole %.

A third group of preferred polyterephthalamides includes polyterephthalamides the recurring units of which are formed by polycondensation reaction of terephthalic acid, at least one aliphatic diacid and at least one aliphatic diamine. The aliphatic diacid is preferably adipic acid.

Within this third group of polyterephthalamides, a first type of polyterephthalamides are those wherein the mole content of terephthalamide recurring units with respect to the total number of moles of terephthalamide and adipamide recurring units is preferably 60 mole % or more; in addition it is advantageously 80 mole % or less, and preferably 70 mole % or less.

Within this third group of polyterephthalamides, a second type of polyterephthalamides are those wherein the mole content of terephthalamide recurring units with respect to the total number of moles of terephthalamide and adipamide recurring units is preferably less than 60 mole %.

A fourth group of preferred polyterephthalamides includes polyterephthalamides the recurring units of which are formed by polycondensation reaction of terephthalic acid, isophthalic acid, at least one aliphatic diacid and at least one aliphatic diamine. The aliphatic diacid is preferably adipic acid.

Within this fourth group of polyterephthalamides, a first type of polyterephthalamides are those wherein the mole content of terephthalamide recurring units with respect to the total number of moles of terephthalamide, isophthalamide and adipamide recurring units is advantageously at least 60 mole %; in addition, it is advantageously at most 80 mole %, and preferably 70 mole % or less. This first type of polyterephthalamides are also those wherein the mole content of isophthalamide recurring units with respect to the total number of moles of terephthalamide, isophthalamide and adipamide recurring units is advantageously at least 10 mole %, preferably at least 20 mole %; besides its is advantageously at most 40 mole % and preferably at most 30 mole %.

Within this fourth group of polyterephthalamides, a second type of polyterephthalamides are those wherein the mole content of terephthalamide recurring units with respect to the total number of moles of terephthalamide, isophthalamide and adipamide recurring units is advantageously less than 60 mole % and preferably less than 55 mole %. For this second type of polyterephthalamides within the fourth group of polyterephthalamides, the mole content of isophthalamide recurring units with respect to the total number of moles of terephthalamide, isophthalamide and adipamide recurring units is advantageously at least 1 mole %, preferably at least 3 mole %, besides it is advantageously at most 25 mole %, preferably at most 15 mole % and more preferably at most 10 mole %.

Within the class of PPA, a second family of preferred polyphthalamides is that of polyphthalamides of which at most 50 mole % of the recurring units are formed by the polycondensation reaction between terephthalic acid and at least one diamine. Among them, preferred are those also containing recurring units formed by polycondensation reaction of the diamine with the isophthalic acid and an aliphatic diacid. The aliphatic diacid is preferably adipic acid.

Among these polyphthalamides, more preferred are those wherein the mole content of terephthalamide recurring units with respect to the total number of moles of terephthalamide, isophthalamide and adipamide recurring units is advantageously more than 25 mole %, preferably more than 35 mole % and more preferably more than 45 mole %. For these polyphthalamides, the mole content of isophthalamide recurring units with respect to the total number of moles of terephthalamide, isophthalamide and adipamide recurring units is advantageously at least 1 mole %, preferably at least 3 mole %, advantageously at most 25 mole %, preferably at most 10 mole %.

Of course, more than one aromatic polyamide may be used in the invention compositions.

The aromatic polyamide of the invention composition is advantageously present in an amount of less than or equal to 90 wt.%, preferably less than or equal to 80 wt.%, more preferably less than or equal to 75 wt.%. In addition, the aromatic polyamide is advantageously present in an amount of 25 wt.% or greater, preferably 40 wt.% or greater, more preferably 60 wt.% or greater and still more preferably 70 wt.% or more based on the total weight of the polymer composition.

The aromatic polyamide component of the invention polymer composition may have an inherent viscosity of from 0.5 dl/g to 2.5 dl/g when determined at 30°C on a 0.4 weight percent solution in a 60/40 weight to weight phenol/1,1,2,2-tetrachloroethane solvent mixture. Preferably, the inherent viscosity of the polyamide component is 0.7 dl/g or greater, more preferably 0.9 dl/g or greater, still more preferably 1 dl/g or greater. In addition, the inherent viscosity of the aromatic polyamide is preferably 2.2 dl/g or less, more preferably 2.1 dl/g or less, and still more preferably 2 dl/g or less.

Suitable aromatic polyamides for use in the present invention are disclosed in previously referenced U.S. Patent Nos. 5,436,294; 5,447,980; and RE34,447 to Poppe et al.

Other aromatic polyamides that may be used herein are described in U.S. patents 6,531,529; 6,359,055; 5,665,815; 6,524,671; 6,306,951; and 5,416,189; all incorporated herein by reference.

### Elastomers

The polymer composition of the invention comprises at least two elastomers, hereafter the first elastomer and the second elastomer.

The first elastomer of the polymer composition of the invention comprises recurring units derived from at least one acyclic olefin (O1) which comprises at most 4 carbon atoms, and recurring units derived from at least one acyclic olefin (O2) which comprises more than 6 carbon atoms.

For the purpose of the present invention, the term "olefin" indicates any type of alkene, e.g., acyclic monoolefins, conjugated acyclic diolefins, non-conjugated acyclic diolefins, cyclic mono-olefins, non-conjugated cyclic-diolefins, bicyclic mono-olefins, bicyclic di-olefins, etc.

Acyclic olefm (O1) is advantageously chosen from ethylene, propylene, 1-butene, iso-butene, 2-butene, butadiene, isomers thereof and mixtures thereof. Acyclic olefin (O1) is preferably chosen from ethylene, propylene, 1-butene and mixtures thereof. Acyclic olefin (O1) is more preferably ethylene, propylene or a mixture of ethylene and propylene. Still more preferably, acyclic olefin (O1) is ethylene.

Acyclic olefm (O2) is advantageously chosen from 1-heptene, 1-octene, 1-nonene, 1-decene, 1-undecene, 1-dodecene, α-ω-heptadiene, α-ω-octadiene, α-ω-decadiene, α-ω-dodecadiene, isomers thereof and mixtures thereof. Acyclic olefin (O2) is preferably chosen from 1-heptene, 1-octene, 1-nonene, 1-decene, α-ω-heptadiene, α-ω-octadiene, α-ω-decadiene, isomers thereof and mixtures thereof. Acyclic olefin (O2) is more preferably chosen from 1-heptene, 1-octene, α-ω-heptadiene, α-ω-octadiene, isomers thereof and mixtures thereof. Acyclic olefin (O2) is still more preferably chosen from 1-octene, isomers thereof and mixtures thereof. Most preferably, acyclic olefin (O2) is 1-octene.

The first elastomer of the polymer composition of the invention may further comprise recurring units derived from at least one monomer other than (O1) and (O2) (hereafter, additional monomer (A1)).

Additional monomer (A1) may be any ethylenically unsaturated comonomer except that acyclic olefins (O1) having at most 4 carbon atoms and acyclic olefins (O2) having more than 6 carbon atoms are excluded.

Additional monomers (A1) may include : linear mono-olefins, for example 1-pentene, 1-hexene and isomers thereof; cyclic and bicyclic mono-olefins, for example, cyclobutene, cyclopentene, cyclohexene and norbomene; common conjugated diolefms, for example, isoprene and isomers thereof; non-conjugated straight chain di-olefins and/or non-conjugated cyclic and bicyclic diolefins, for example, 1,4-hexadiene, dicyclopentadiene, ethylidene norbomene (ENB) and norbomadiene; ethylenically unsaturated monomers bearing at least one polar functional group (i.e., vinyl monomers), for example, acrylonitrile (AN); methacrylonitrile; methylvinyl ketone; esters of acrylic or methacrylic acid for example, methylacrylate (MA) or methylmethacrylate (MMA); vinyl acetate (VA); halogenated vinyl monomers, for example, vinyl chloride, vinylidene dichloride, vinylidene fluoride, hexafluoropropylene, tetrafluoroethylene, chlorotrifluoroethylene, hydropentafluoropropylene, chloroprene, 2,3-dichloro-1,3-butadiene; perfluorovinylethers, for example, perfluoromethylvinylether; aromatic vinyl monomers, for example, styrene (STY), alkyl substituted styrene, halo substituted styrene, divinylbenzene, isomers of divinylbenzene; dicarboxylic unsaturated acids; esters of dicarboxylic unsaturated acids; anhydrides of dicarboxylic unsaturated acids, for example, maleic anhydride or succinic anhydride; epoxy compounds, for example glycidyl acrylate or methacrylate; and mixtures thereof.

The first elastomer of the polymer composition of the invention may be functionalized or not. In a preferred embodiment, the first elastomer is functionalized. The first elastomer, in its functionalized versions, may advantageously be obtained by any one of the techniques known in the art, for example : copolymerization of unfunctionalized olefin with ethylenically unsaturated monomers bearing at least one polar functional group (i.e., vinyl monomers); grafting of the unfunctionalized first elastomer with one or more ethylenically unsaturated monomers bearing at least one functional group; and at least one of direct chlorination, direct fluorination, direct sulfonation, direct chlorosulfonation of the unfunctionalized first elastomer. In a particularly preferred embodiment the first elastomer is functionalized by grafting.

Grafting of the first unfunctionalized elastomer includes advantageously reacting the vinyl monomer in admixture with the heated unfunctionalized first elastomer, preferably in the presence of a peroxide or free-radical initiator.

Where the first elastomer is functionalized by grafting, one or more ethylenically unsaturated monomers bearing one or more polar functional groups may advantageously be used as grafting agent, for example : acrylonitrile; methacrylonitrile; methylvinyl ketone; unsaturated dicarboxylic acids, esters thereof, and anhydrides thereof; acrylic and/or methacrylic acid, and esters thereof; vinyl acetate; styrene, alkyl substituted styrenes, halo substituted styrenes, divinyl benzene, and isomers of divinyl benzene; halogenated vinyl monomers, for example, vinyl chloride, vinylidene chloride, vinylidene fluoride, hexafluoropropylene, tetrafluoroethylene, chlorotrifluoroethylene, etc. Preferably, the grafting agent is an unsaturated dicarboxylic acid, an ester thereof, an anhydride thereof, a salt thereof, or a mixture thereof. More preferably, the grafting agent is an anhydride of dicarboxylic acid. Still more preferably, the grafting agent is maleic and/or succinic anhydride. Most preferably, the grafting agent is maleic anhydride.

When the first elastomer is functionalized by acids or anhydrides, in particular when it is maleated, it may be partially or completely neutralized by reaction with a metal cation. The metal cation may be in the form of a hydroxide (for example, NaOH and/or Zn(OH)₂), an organic salt (for example sodium lactate and/or zinc acetate) and/or an inorganic salt (for example Na₂CO₃ and/or NaHCO₃).

The first elastomer grafted with a grafting agent comprises advantageously at least 0.01 wt.% of the grafting agent, preferably 0.10 wt.% or more of the grafting agent, more preferably 0.50 wt.% or more of the grafting agent and still more preferably 1.5 wt.% or more of the grafting agent. Besides, the first elastomer grafted with a grafting agent comprises advantageously 10 wt.% or less of the grafting agent, preferably 6 wt.% or less of the grafting agent, more preferably 4.0 wt.% or less of the grafting and still more preferably 3.0 wt.% or less of the grafting agent.

Preferred first elastomers include, for example, ethylene/1-octene copolymers (C₂-C₈), propylene/1-octene copolymers (C₃-C₈), ethylene/propylene/1-octene terpolymers (C₂-C₃-C₈), ethylene/1-butene/1-octene terpolymers (C₂-C₄-C₈), propylene/1-butene/1-octene terpolymers (C₃-C₄-C₈), ethylene/1-octene/1-pentene terpolymers (C₂-C₈-C₅), ethylene/1-octene/styrene terpolymers (C₂-C₈-STY), ethylene/1-octene/acrylonitrile terpolymers (C₂-C₈-AN), ethylene/1-octene/methylacrylate terpolymers (C₂-C₈-MA), ethylene/1-octene/vinyl acetate terpolymers (C₂-C₈-VA), ethylene/1-octene/methyl methacrylate terpolymers (C₂-C₈-MMA), propylene/1-octene/styrene terpolymers (C₃-C₈-STY), propylene/1-octene/acrylonitrile terpolymers (C₃-C₈-AN), propylene/1-octene/methylacrylate terpolymers (C₃-C₈-MA), propylene/1-octene/vinyl acetate terpolymers (C₃-C₈-VA), propylene/1-octene/methyl methacrylate terpolymers (C₃-C₈-MMA), ethylene/1-octene/1,4-hexadiene terpolymers, propylene/1-octene/1,4-hexadiene terpolymers, ethylene/1-octene/ethylidenenorbornene terpolymers (C₂-C₈-ENB), propylene/1-octene/ethylidenenorbornene terpolymers (C₃-C₈-ENB), and mixtures thereof.

Among the first elastomers are not included for example : ethylene-propylene copolymers (EPR), chlorosulphonated ethylene polymers (PE rubber), ethylene/1-butene and ethylene/1-hexene copolymers, ethylene/propylene/1-butene terpolymers, ethylene/propylene/1-hexene terpolymers, ethylene/propylene/1,4-hexadiene terpolymers (EPDM) and ethylene/propylene/ethylidene norbomene terpolymers (EPDM), butadiene rubbers (cis-1,4-polybutadiene), butyl rubbers (IIR, isobutylene-isoprene rubber), nitrile butadiene rubbers (NBR, copolymers of butadiene with acrylonitrile), styrene-butadiene rubbers (SBR), styrene-ethylene-butadiene-styrene rubbers (SEBS), ethylene-acrylic cross-linked rubbers (copolymers of ethylene with methyl methacrylate), poly(tetrafluoroethylene-co-propylene), natural rubber, (cis-1,4-polyisoprene), chloroprene rubbers or neoprene (trans-1,4-polychloroprene), ethylene or propylene free-fluorinated elastomers, polyethers like epichlorohydrin elastomers and propylene oxide elastomers, polypentenamers such as polycyclopentene, and thermoplastic urethane elastomers.

In the first elastomer of the polymer composition of the invention, the recurring units derived from (O1) are advantageously present in an amount of 95 wt.% or less, preferably 90 wt.% or less, more preferably 85 wt.% or less and still more preferably 82 wt.% or less. In the first elastomer of the polymer composition of the invention, the recurring units derived from (O1) are advantageously present in an amount of 50 wt.% or more, preferably 60 wt.% or more, more preferably 70 wt.% or more, still more preferably 78 wt.% or more, and most preferably 80 wt.%.

In the first elastomer of the polymer composition of the invention, the recurring units derived from (O2) are advantageously present in an amount of 50 wt.% or less, preferably 40 wt.% or less, more preferably 30 wt.% or less and still more preferably 22 wt.% or less. In the first elastomer of the polymer composition of the invention, the recurring units derived from (O2) are advantageously present in an amount of 5 wt.% or more, preferably 10 wt.% or more, more preferably 15 wt.% or more, still more preferably 18 wt.% or more, and most preferably 20 wt.%.

In the first elastomer, the recurring units derived from additional monomers (A1) (i.e. monomers other than (O1) and (O2)) are advantageously present in an amount of 40 wt.% or less, preferably 28 wt.% or less, more preferably 15 wt.% or less, still more preferably 4 wt.% or less and most preferably the first elastomer is free of recurring units derived from monomers other than (O1) and (O2).

The second elastomer of the polymer composition of the invention comprises recurring units derived from at least one acyclic olefin (O3) comprising at most 4 carbon atoms and it is free of recurring units derived from an acyclic olefin comprising more than 6 carbon atoms.

Acyclic olefin (O3) is advantageously chosen from ethylene, propylene, 1-butene, trans 2-butene, cis 2-butene, isobutene, trans butadiene, cis butadiene, and mixtures thereof. Preferably, acyclic olefin (O3) is chosen from ethylene, propylene, 1-butene and mixtures thereof. More preferably, acyclic olefm (O3) is ethylene, propylene or a mixture of ethylene and propylene. Still more preferably acyclic olefm (O3) is a mixture of ethylene and propylene. When (O3) is a mixture of ethylene and propylene, the weight ratio of ethylene and propylene is advantageously greater than 1/10, preferably greater than 1/3, more preferably greater than 1, still more preferably greater than 3/2. The ethylene to propylene weight ratio is advantageously less than 10, preferably less than 5, more preferably less than 3 and still more preferably less than 2.

The second elastomer of the polymer composition of the invention may further contain recurring units derived from at least one monomer other than (O3) (hereafter, additional monomer (A2)).

Examples of additional monomer (A2) include C₅ and C₆ acyclic mono-olefins, for example, 1-pentene, 1-hexene, and isomers thereof; C₅ and C₆ acyclic di-olefins, for example, α-ω hexadiene, 1,4-hexadiene, and isomers thereof; non-conjugated cyclic di-olefms, for example, dicyclopentadiene, ethylidene norbomene (ENB), norbomadiene; cyclic mono-olefins, for example, cyclobutene, cyclopentene, cyclohexene, norbomene; ethylenically unsaturated monomers bearing at least one polar functional group (e.g., vinyl monomers), for example, acrylonitrile, methacrylonitrile; methyl vinyl ketone; esters of acrylic or methacrylic acid for example, methylacrylate, methylmethacrylate; vinyl acetate; halogenated vinyl monomers for example, vinyl chloride, vinylidene chloride, vinylidene fluoride, hexafluoropropylene, tetrafluoroethylene, chlorotrifluoroethylene, hydropentafluoropropylene, chloroprene, 2,3-dichloro-1,3-butadiene, isoprene; perfluorovinyl ethers, for example, perfluoromethyl vinyl ether; aromatic vinyl monomer, for example, styrene, alkyl substituted styrene, halosubstituted styrene, divinyl benzene, isomers of divinyl benzene; dicarboxylic unsaturated acids, esters of dicarboxylic unsaturated acids, anhydrides of dicarboxylic unsaturated acids, for example, maleic anhydride or succinic anhydride; epoxy compounds, for example glycidyl acrylate or methacrylate; and mixtures thereof.

Additional monomer (A2) is preferably a C₅ and/or C₆ acyclic diolefin; a non-conjugated cyclic diolefin; or a cyclic mono-olefin; or mixtures thereof. More preferably, additional monomer (A2) is a C₅ acyclic diolefin (e.g. isoprene) and/or a C₆ acyclic diolefm (e.g. 1,4-hexadiene) and/or a non-conjugated cyclic diolefin (e.g. ethylidene norbomene, dicyclopentadiene). Still more preferably, additional monomer (A2) is a non-conjugated cyclic diolefin. Most preferably, additional monomer (A2) is ethylidene norbomene (ENB).

The second elastomer may be functionalized or not. Preferably, the second elastomer is functionalized. The second elastomer, in its functionalized versions, may advantageously be obtained by any technique in the art, including : copolymerization of unfunctionalized olefins with ethylenically unsaturated monomers bearing at least one polar functional group (i.e., vinyl monomers); grafting of the unfunctionalized second elastomer with ethylenically unsaturated monomers bearing at least one functional group; at least one of direct chlorination, direct fluorination, direct sulfonation, direct chlorosulfonation of the unfunctionalized second elastomer. More preferably, the second elastomer is functionalized by grafting.

When the second elastomer is functionalized by grafting, one or more ethylenically unsaturated monomers bearing at least one polar functional group may be used as grafting agent, for example, acrylonitrile; methacrylonitrile; methyl vinyl ketone ; unsaturated dicarboxylic acids, esters thereof, anhydrides thereof; acrylic and/or methacrylic acids, esters thereof; vinyl acetate; styrene, alkyl substituted styrenes, halo substituted styrenes, divinyl benzene, isomers of divinyl benzene; halogenated vinyl monomers, for example, vinyl chloride, vinylidene chloride, vinylidene fluoride, hexafluoropropylene, tetrafluoroethylene, chlorotrifluoro ethylene etc.

Preferably, the grafting agent is an unsaturated dicarboxylic acid, an ester thereof, an anhydride thereof, a salt thereof, or a mixture thereof. More preferably, the grafting agent is an anhydride of dicarboxylic acid. Still more preferably, the grafting agent is maleic and/or succinic anhydride. Most preferably, the grafting agent is maleic anhydride.

When the second elastomer is functionalized by acids or anhydrides, in particular when it is maleated, it may be partially or completely neutralized by reaction with a metal cation. For example, the cation may be in the form of a hydroxide (for example, NaOH and/or Zn(OH)₂), an organic salt (for example sodium lactate and/or zinc acetate) and/or an inorganic salt (for example Na₂CO₃ and/or NaHCO₃).

The grafting of the ethylenically unsaturated monomers bearing polar functional groups onto the unfunctionalized second elastomer may be accomplished by techniques known in the art and may include reacting a vinyl monomer in admixture with the heated unfunctionalized second elastomer, preferably in the presence of a peroxide or free-radical initiator.

Advantageously, the grafted second elastomer comprises at least 0.001 wt.% of a grafting agent. Preferably, at least 0.1 wt.%. More preferably at least 0.15 wt.%. Still more preferably at least 0.2 wt.% of the grafting agent. In addition, the grafted second elastomer advantageously comprises at most 5 wt.% of a grafting agent. Preferably, at most 3 wt.%. More preferably at most 1 wt.%. Still more preferably at most 0.8 wt.% of the grafting agent.

The second elastomer of the polymer composition of the invention may be, for example, one or more of EPR (ethylene propylene rubber), EPDM (ethylene propylene diene monomer) (for example wherein the diene is 1,4-hexadiene or ENB), butadiene rubbers (cis-1,4-polybutadiene); butyl rubbers (IIR, isobutylene-isopropylene rubber); nitrile butadiene rubbers (NBR, copolymers of butadiene with acrylonitrile), non hydrogenated or at least partially hydrogenated styrene-butadiene rubbers (SBR); non-hydrogenated or at least partially hydrogenated styrene-ethylene-butadiene-styrene rubbers (SEBS); ethylene-acrylic cross-linked rubbers (copolymers of ethylene with MMA); poly(tetrafluoroethylene-co-propylene) rubber; chlorosulphonated ethylene polymers (PE rubber), etc.

EPDM may be a particularly preferred second elastomer, where the diene may be 1,4-hexadiene or ENB.

The second elastomer of the polymer composition of the invention may not be any one of: natural rubbers (cis-1,4-polyisoprene); chloroprene rubbers or neoprene (trans-1,4-polychloroprene); ethylene or propylene free-fluorinated elastomers; polyethers like epichlorohydrin elastomers and propylene oxide elastomers; polypentenamers for example, polycyclopentene; thermoplastic urethane elastomers.

Advantageously, the second elastomer contains 99 wt.% or less of the acyclic olefin (O3), preferably 98 wt.% or less, more preferably 97 wt.% or less. Advantageously, the second elastomer comprises 50 wt.% or more of (O3), preferably 80 wt.% or more, more preferably 90 wt.% or more, and still more preferably 95 wt.% or more. When the second elastomer component comprises an additional monomer (A2) such as ENB, advantageously, the second elastomer contains 50 wt.% or less of additional monomer (A2), preferably 20 wt.% or less, more preferably 10 wt.% or less, still more preferably 5 wt.% or less. Advantageously, the second elastomer comprises 1.0 wt.% or more of additional monomer (A2), preferably 2.0 wt.% or more, more preferably 3.0 wt.% or more.

The first and second elastomers may be selected from elastomers having any molecular weight and molecular weight distribution.

Advantageously, the number average molecular weight (Mn) of the first elastomer is greater than 5,000. Preferably, the number average molecular weight is greater than 10,000, more preferably greater than 20,000, and still more preferably greater than 25,000. In addition, the number average molecular weight of the first elastomer is advantageously 100,000 or less. Preferably, the number average molecular weight of the first elastomer is 80,000 or less, more preferably 50,000 or less, still more preferably 35,000 or less.

Advantageously, the weight average molecular weight (Mw) of the first elastomer is greater than 15,000. Preferably, the weight average molecular weight is greater than 50,000, more preferably greater than 100,000, still more preferably greater than 125,000. In addition, the weight average molecular weight of the first elastomer is advantageously 300,000 or less. Preferably, the weight average molecular weight of the first elastomer is 400,000 or less, more preferably, 250,000 or less, still more preferably 175,000 or less.

The average molecular weight (Mz) of the first elastomer is advantageously from 190,000 to 550,000. The average molecular weight (Mz) is preferably greater than 200,000, more preferably 210,000 or greater, and still more preferably 220,000 or greater. In addition, the average molecular weight (Mz) of the first elastomer is preferably 540,000 or less, more preferably 530,000 or less, and still more preferably 520,000 or less.

The number average molecular weight of the second elastomer is advantageously from 5,000 to 100,000. Preferably, the number average molecular weight of the second elastomer is 15,000 or greater, more preferably 30,000 or greater, still more preferably 45,000 or greater. Preferably, the number average molecular weight of the second elastomer is 120,000 or less, or preferably 80,000 or less, still more preferably 60,000 or less. The weight average molecular weight of the second elastomer is advantageously from 15,000 to 300,000. Preferably, the weight average molecular weight if the second elastomer is 80,000 or greater, preferably 140,000 or greater, still more preferably 180,000 or greater. Preferably, the weight average molecular weight of the second elastomer is 500,000 or less, more preferably 300,000 or less, still more preferably 225,000 or less.

The average molecular weight (Mz) of the second elastomer is advantageously from 190,000 to 600,000. Preferably, the average molecular weight (Mz) of the second elastomer is 250,000 or greater, more preferably, 380,000 or greater, still more preferably 530,000 or greater. Preferably, the average molecular weight (Mz) of the second elastomer is 580,000 or lower, more preferably 570,000 or less, still more preferably 560,000 or less.

The ratio of the number average molecular weights of the second elastomer to the first elastomer (Mn second elastomer/Mn first elastomer), is advantageously greater than 1, preferably greater than 4/3, more preferably greater than 3/2. The ratio of the number average molecular weights of the second elastomer and the first elastomer is advantageously less than 3, preferably less than 2, more preferably less than 9/10. The ratio of the weight average molecular weight of the second elastomer to the first elastomer (Mw of second elastomer/Mw of first elastomer) is advantageously greater than 1, preferably greater than 6/5. The ratio of the weight average molecular weight of the second elastomer to the first elastomer is advantageously less than 3, preferably less than 2, more preferably less than 3/2.

The weight ratio of the second to the first elastomer present in the polymer composition of the invention is advantageously less than 15, preferably less than 10, and more preferably less than 5. The weight ratio of the second to the first elastomer present in the polymer composition of the invention is advantageously greater than 1, preferably greater than 2 and more preferably greater than 3. Functionalized polyolefin elastomers are available from commercial sources, including : maleated ethylene-propylene copolymers such as EXXELOR® VA 1801 from the Exxon Mobil Chemical Company; EXXELOR® MDEX 94-11-2 from the Exxon Mobil Chemical Company; maleated ethylene-propylene-diene terpolymers such as ROYALTUF® 498 available from the Crompton Corporation; and maleated ethylene-octene copolymers such as FUSABOND® 493D from the Du Pont Company.

Other functionalized elastomers are : acrylic or acrylate-modified polyethylene rubbers such as SURLYN® (e.g. SURLYN® 9920) available from the DuPont Company; maleic anhydride-modified styrene-ethylene-butylene-styrene (SEBS) block copolymer, such as KRATON® FG1901X available from Kraton Polymers.

Of course, more than two elastomers may be used in the invention compositions.

The amount of the elastomer present in invention composition is not limited and will preferably be a quantity sufficient to desirable mechanical characteristics. Weight percentages of elastomer and aromatic polyamide are thus not limited.

The total amount of the first and the second elastomers is advantageously 50 wt.% or less, preferably 40 wt.% or less, more preferably 30 wt.% or less, and still more preferably 27 wt.% or less. The total amount of the first and second elastomers is advantageously 1 wt.% or more, preferably 10 wt.% or more, more preferably 20 wt.% or more, and still more preferably 23 wt.% or more.

The impact modifier and aromatic polyamide can be mixed together in any manner, and mixing can occur before, e.g., extrusion, or the materials may be mixed in an extruder.

### Additives

The invention polymer composition may optionally further comprise one or more additives. Possibly useful additives include, for example, an external lubricant, such as a metallic stearate, polytetrafluoroethylene (PTFE) or low density polyethylene (LDPE), to facilitate extrusion. Suitable powdered PTFE include POLYMIST® F5A available from Solvay Solexis.

Another possibly useful additive is a pigment and/or a or dye, including, for example, carbon black (e.g. Vulcan® Black available from the Cabot Corporation), nigrosine dye, and mixtures thereof. Carbon-based materials may optionally be conductive.

Another possibly useful additive is a heat stabilizer. Suitable heat stabilizers include copper-containing stabilizers comprising a copper compound soluble in the polyamide and an alkali metal halide. More particularly, in certain embodiments the stabilizer comprises a copper (I) salt, for example cuprous acetate, cuprous stearate, a cuprous organic complex compound such as copper acetylacetonate, a cuprous halide or the like, and an alkali metal halide. In certain embodiments of the present invention, the stabilizer comprises a copper halide selected from copper iodide and copper bromide and an alkali metal halide selected from the iodides and bromides of lithium, sodium, and potassium. Formulations comprising copper (I) halide, an alkali metal halide and a phosphorus compound can also be employed to improve the stability of hollow bodies formed from polyphthalamide compositions during extended exposure to temperatures up to about 140 °C. The amount of the stabilizer used is preferably that amount sufficient to provide a level of from about 50 ppm to about 1000 ppm copper. Preferred compositions of the invention comprise an alkali metal halide and copper (I) halide at a weight ratio the range of from about 2.5 to about 10, and most preferably from about 8 to about 10. Generally, the combined weight of copper and alkali metal halide compound in a stabilized invention aromatic polyamide composition ranges from about 0.01 wt. % to about 2.5 wt. %.

A particularly suitable stabilizer for polyamide compositions according to the present invention comprises pellets of a 10/1 by weight mixture of potassium iodide and cuprous iodide with a magnesium stearate binder. The potassium iodide/cuprous iodide heat stabilizer provides protection against long term heat aging, such as exposure to under-the-hood automobile temperatures.

Another possibly useful additive is a filler such as a reinforcing filler, or structural fiber. Structural fibers useful in forming filled articles and composite products include glass fiber, carbon or graphite fibers and fibers formed of silicon carbide, alumina, titania, boron and the like, as well as fibers formed from high temperature engineering resins such as, for example, poly(benzothiazole), poly(benzimidazole), polyarylates, poly(benzoxazole), aromatic polyamides, polyaryl ethers and the like, and may include mixtures comprising two or more such fibers. Suitable fibers possibly useful herein include glass fibers, carbon fibers and aromatic polyamide fibers such as the fibers sold by the DuPont Company under the trade name KEVLAR®. Fillers present in the invention polymer composition, if any, may increase the flexural modulus, for example, in blow molding applications. The amount of fibers is preferably an amount that does not decrease the melt strength of the polymer composition or detrimentally affect surface finish.

Another possibly useful additive is an antioxidant. Useful antioxidants include Nauguard 445, phenols (for ex. Irganox® 1010, Irganox® 1098 from Ciba), phosphites, phosphonites (e.g., Irgaphos® 168 from Ciba, Irgaphos P-EPQ® from Clariant or Ciba), thiosynergists (e.g., Lowinox® DSTDP from Great Lakes), hindered amine stabilizers (e.g., Chimasorb® 944 from Ciba), hydroxyl amines, benzofuranone derivatives, acryloyl modified phenols, etc.

Other fillers which may also be used in polyamide compositions according to the invention include antistatic additives such as carbon powders (e.g. Vulcan® Black from Cabot), multi-wall carbon nanotubes and single wall nanotubes as well as flake, spherical and fibrous particulate filler reinforcements and nucleating agents such as talc, mica, titanium dioxide, potassium titanate, silica, kaolin, chalk, alumina, mineral fillers, and the like. The fillers and structural fiber may be used alone or in any combination.

Further possibly useful additives include, without limitation, pigments, dyes, flame retardants, and the like, including those additives commonly used in the resin arts. The additives may be employed alone or in any combination, as needed. For particular applications, it may also be useful to include plasticizers, lubricants, and mold release agents, as well as thermal, oxidative and light stabilizers, and the like. The levels of such additives can be determined for the particular use envisioned by one of ordinary skill in the art in view of this disclosure.

The invention polymer composition preferably further comprises one or more additives chosen from antioxidants, PTFE and pigments. The antioxidant is present in an amount of advantageously 3 wt.% or less, preferably 2 wt.% or less, more preferably 1 wt.% or less. In addition, the antioxidant is present in an amount of advantageously 0.1 wt.% or more, preferably 0.2 wt.% or more and more preferably 0.5 wt.% or more.

Another aspect of the present invention is a method of making the above described composition wherein the aromatic polyamide, the first elastomer, the second elastomer and the optional additives, if present, are mixed in the molten state.

The invention polymer composition may be extruded, co-extruded, injection molded, blow molded, cast, thermoformed, etc.

Thus, a last aspect of the present invention is a shaped article manufactured from the polymer composition as above described.

The invented shaped article may be chosen from hoses, pipes, tubings, films, filaments, fibers, tanks, blow molded articles, injection molded articles, thermoformed articles, multi-layer structures, sheets etc.

### EXAMPLES

Provided below are examples not limitative of the present invention where illustrative thereof. Four polyamide compositions are shown in Table I below.

**Table I**

| | Ex.1 According to the invention | C.Ex.1 Comparative | C.Ex.2 Comparative | C.Ex.3 Comparative |
|---|---|---|---|---|
| Component | wt.% | wt.% | wt.% | wt.% |
| Polyterephthalamide (4^{th} group 1^{st} type) | 73.6 | 73.6 | 73.6 | 73.6 |
| EPDM 1 | 20 | 0 | 0 | 0 |
| (C2-C8) | 5 | 0 | 0 | 0 |
| EPDM 2 | 0 | 25 | 20 | 0 |
| EPR | 0 | 0 | 0 | 20 |
| PE | 0 | 0 | 5 | 5 |
| PTFE | 0.5 | 0.5 | 0.5 | 0.5 |
| Carbon black | 0.4 | 0.4 | 0.4 | 0.4 |
| Stabilizer | 0.5 | 0.5 | 0.5 | 0.5 |
| Total | 100 | 100 | 100 | 100 |

The EPDM 1 component is an ethylene/propylene/ethylidene norbornene terpolymer rubber. The composition of the EPDM 1 component, as determined by C¹³ NMR, is 61 wt.% of ethylene, 35.5 wt.% of propylene and 3.5 wt.% of ethylidene norbornene. The EPDM1 component is grafted with 0.33 wt.% of maleic anhydride as determined by C¹³ NMR after esterification.

The (C2-C8) component is an ethylene/1-octene copolymer rubber. The composition of the (C2-C8) component, as determined by C¹³ NMR, is 20 wt.% of 1-octene and 80 wt.% of ethylene. The (C2-C8) component is grafted with 2.2 wt.% of maleic anhydride as determined by C¹³ NMR.

The EPDM 2 component is an ethylene/propylene/ethylidene norbornene terpolymer rubber.

The composition of the EPDM 2 component, as determined by C¹³ NMR, is the same as for the EPDM 1 component (i.e. is 61 wt.% of ethylene, 35.5 wt.% of propylene and 3.5 wt.% of ethylidene norbornene). The EPDM 2 component is grafted with 0.67 wt.% of maleic anhydride as determined by C¹³ NMR after esterification. The EPR component is an ethylene/propylene rubber and its composition is 23 wt. % of propylene and 77 wt.% of ethylene. The EPR component is grafted with 0.61 wt.% of maleic anhydride as determined by C¹³ NMR after esterification.

The PE component is a polyethylene and is grafted with 0.87 wt.% of maleic anhydride as determined by C¹³ NMR after esterification. The PTFE component is a polytetrafluoroethylene lubricant. The molecular weights and the grafting level of the components EPDM 1,(C2-C8), EPDM 2, EPR and PE are reported in Table II.

**Table II**

| | EPDM 1 | (C2-C8) | EPDM 2 | EPR | PE |
|---|---|---|---|---|---|
| Grafting level (wt.%) | 0.33 | 2.2 | 0.67 | 0.61 | 0.87 |
| Mₙ | 51710 | 31644 | 26344 | 46077 | 23031 |
| M_{w} | 199566 | 144150 | 133865 | 125941 | 77376 |
| M_{z} | 555464 | 502144 | 392512 | 271946 | 203294 |
| M_{w}/Mₙ | 3.86 | 4.56 | 5.08 | 2.73 | 3.36 |
| M_{z}/M_{w} | 2.78 | 3.48 | 2.93 | 2.16 | 2.63 |

The molecular weights were determined in trichlorobenzene at 135°C. Four columns HMW-6E were calibrated with PS standards (from 7520000 to 2950). The results are given according to the Mark-Houwink law and using the coefficients determined for the polyethylene, which are K=3.92 e⁻⁴ and alpha=0.725.

A first sample of polymer composition according to Ex.1 (according to the invention) was prepared by tumbling 81,26 g of polyterephthalamide (4^{th} group 1^{st} type), 22,08 g of EPDM 1, 5,52 g of (C2-C8), 552 g of the stabilizer, 552 g of PTFE and 441 g of carbon black in a 55 gallons drum for 30 minutes. The dry blend was fed to a ZSK-40 twin screw extruder and melt compounded using barrel temperatures settings of 360, 360, 360, 370, 370, 340, 340, 325, 300, 260, 250 and 350°C at a throughput rate of 90,72 g per hour and a screw speed of 370 rpm under vacuum of 27 mm of mercury. The compounded melt was pelletized and the pellets were dried for 48 hours at about 110°C.

A polymer composition according to C.Ex.1 (comparative) was prepared by tumbling 81, 26 g of polyterephthalamide (4^{th} group 1^{st} type), 27,60 g of EPDM 2, 552 g of the stabilizer, 552 g of PTFE and 441 g of carbon black in a 55 gallons drum for 30 minutes.

The dry blend was fed to a ZSK-40 twin screw extruder and melt compounded using barrel temperatures settings of 360, 360, 360, 370, 370, 340, 340, 325, 300, 260, 250 and 350°C at a throughput rate of 90,72 g per hour and a screw speed of 370 rpm under vacuum of 27 mm of mercury. The compounded melt was pelletized and the pellets were dried for 48 hours at about 110°C. Films of the polymer compositions of Ex.1 and C.Ex.1 were produced by extrusion using a 2.54 cm single screw extruder and a 20.32 cm die. A metering screw with L/D of 20 and a compression ratio of 4/1 were used. The barrel temperature settings were 310, 315.5, 321.1, 321.1, 326.6, 326.6, 332.2 °C from the rear to the die. The extruder speed was fixed at 60 rpm. Rolls were heated to 135 °C. To demonstrate the advantage of the composition of Ex.1 compared to the composition of C.Ex.1, namely its draw ability, the rolls were positioned adjacent to the die and the pull rate was increased progressively until the film breaks. The maximum pulling rate recorded for the polymer composition of Ex.1 was 558.8 cm per minute to compare 152.4 cm per minute for the polymer composition of C.Ex.1. The minimum thickness which could be obtained with the polymer composition of Ex.1 was 0.003 cm to compare to 0.019 cm for the polymer composition of C.Ex.1.

The same experiment was reproduced which the rolls positioned at 15.24 cm from the die. The maximum pulling rate was 304.8 cm per minute for the polymer composition of Ex.1 whereas it was only 142.24 cm per minute in the case of the polymer composition of C.Ex.1. The minimum film thickness that could be obtained was 0.009 cm for the polymer composition of Ex. 1 and 0.022 cm for the polymer composition of C.Ex.1. When the rolls were placed at 30.48 cm from the die, the maximum pulling rate was 269.24 cm per minute for the polymer composition of Ex.1 and 106.68 cm per minute for the polymer composition of C.Ex.1. The minimum film thicknesses obtained were 0.011 cm for the polymer composition of Ex.1 and 0.033 cm for the polymer composition of C.Ex.1. Due to its improved draw ability and melt strength, the polymer composition of Ex.1 is especially useful in making articles by extrusion.

### Extrusion of tubing using a mono-layer set up

Extrusion of the tubing was carried out with a SCAMEX® 30 mm single screw extruder. A screw with an L/D of 26/1 and a flight depth of 3.3/1 was used. Barrel settings were : Z1 (300 °C), Z2 (320 °C), Z3 (325 °C), Z4 (325 °C) The die was a single module extrusion die with an exit diameter of 8.5 mm. The die mandrel diameter at exit was 6.5 mm. The die land at exit was 1 mm with a land length of 30 mm. Die temperatures was controlled at 325 °C. Screw speed was set at 60 rpm. Under these conditions mass through put was 70-80 g/minute and the temperature of the melt was 335-340 °C. Pressure at the screw tip was 200 to 220 bar depending on the material.

Calibration and cooling were done with a ROLLEPAAL® VCU 63/2-2. The cooling tank was under vacuum and in the spray mode. Calibrator diameter was 8.3 mm. Final tubing dimensions were 8 mm (outer diameter) and 6 mm (inner diameter). Tubing was produced from polymer compositions of Ex.1 and C.Ex.1.

### Results - Burst Pressure Testing

Tubing produced from polymer compositions of Ex.1 and C.Ex.1 was also tested for burst pressure according to SAE J2260 at 23 °C. The following result was obtained:
Tubing Produced From Composition of Ex.1 : 10.9 MPa
Tubing Produced From Composition of C.Ex.1 : 9.1 MPa

The polymer composition of Ex.1 provided a better result consisting in an improvement of the burst pressure of almost 20%.

### Large scale film extrusion

Polymer composition of Ex.1 was run on commercial size (76 mm diameter) single screw equipment. The screw with a L/D of 20/1 and a compression ratio of 3/1 was used. Rolls were heated to 125 °C. Barrel settings from rear to front were set from 310 to 325 °C. The adapter and die were set at 330 °C. With a screw speed of 70 rpm, film of 0.4 mm thickness was produced at rates of 2 to 7 meter per minute depending on the head pressure.

Tensile properties of the film above were measured by ASTM D638 :
Tensile strength @ Yield = 54.6 MPa
Elongation @ Yield = 5.2 %
Tensile strength @ Break = 67.8 MPa
Elongation @ Break = 110 %

This demonstrates clearly the commercial utility in the manufacturer of an impact modified polyterephthalamide film and that the properties are excellent for intended end use.

### Thermoforming

Films of polymer composition of Ex.1 of thickness 0.4 mm were successfully thermoformed. A square piece of film was clamped into a frame, similar to the canvas of a picture. The frame was indexed into an oven at 290 to 300 °C for 15-45 seconds. The frame indexes from the oven directly over the tool. Once in position, the tool was raised pushing up and thermoforming the film into the desired article. Temperatures less than 280 °C caused the film to be too rigid to be formed. A temperature greater than 305 °C caused the film to blister or melt.

### Blow Molding

Polymer composition of Ex.1 was run on a commercial (38.1 mm diameter) single screw (L/D, 20/1; compression ratio, 2.5/1) blow molding machine in a circular reservoir, tool, 180 mm tall and 100 mm in diameter. The barrel settings were (rear to front) 318 to 325 °C. The tool was set at 100 °C. With a screw speed of 90 rpm the parison was extruded within the 31 second cycle. Pressure used to inflate the parison was 0.207 bar. Acceptable parts were obtained with a uniform wall thickness of 0.8 mm (+/- 0.2mm). Part weight was 84 grams.

### Further Film Extrusion Comparative Tests

A second sample of polymer composition according to Ex.1 (according to the invention) was prepared by tumbling 5001 g of polyterephthalamide (4^{th} group 1^{st} type), 1,359 g of EPDM1, 339.8 g of (C2-C8), 34.05 g of the stabilizer, 34.5 g of PTFE and 27.15 g of carbon black in a 5 gallons bucket for 30 minutes. The dry blend was fed to a 25 mm BERSTOFF® twin screw extruder and melt compounded using barrel temperatures settings of 340, 340, 340, 340, 315, 285, 255 and 340°C at a throughput rate of 6,804 g per hour and a screw speed of 250 rpm under vacuum of 27 mm of mercury. Two additional polymer compositions according to C.Ex.2, C.Ex.3 (comparative) were prepared following the same abovementioned process except that in the case of the polymer composition of C.Ex.2, the EPDM 1 and (C2-C8) components were replaced by the EPDM 2 and PE components (weight percents of the EPDM 2 and PE components are specified in Table I) whereas in the case of the polymer composition of C.Ex.3, the EPDM 1 and (C2-C8) components were replaced by the EPR and PE components (weight percents of the EPR and PE components are specified in Table I).

Films were produced by extrusion of the polymer compositions of Ex.1, C.Ex.2 and C.Ex.3, using a 2.54 cm single screw extruder and a 20.32 cm die. Materials were dried 48 hours at 110°C prior to extrusion. A metering screw with a L/D of 20/1 and a 4/1 compression ratio was used. The barrel temperature settings were 310, 315.5, 321.1, 321.1, 326.6, 326.6, 332.2 °C from the rear to the die. The extruder speed was fixed at 60 rpm. Rolls were heated to 135 °C. The rolls were positioned adjacent to the die and the pull rate was increased progressively until the film breaks. Results are reported in Table III.

**Table III**

| | Ex.1 | C.Ex.2 | C.Ex.3 |
|---|---|---|---|
| Maximum pulling speed (cm/minute) | 630 | 160 | 127 |
| Film Thickness (cm) | 0.004 | 0.028 | 0.033 |
| Surface Quality | Good | Bad | Bad |
| Ranking | 3 | 2 | 1 |

Examples showed that both processability and quality of the film are improved when the polymer composition contains an EPDM terpolymer and an ethylene/1-octene copolymer (C2-C8) instead of the sole EPDM terpolymer.

Examples also showed that the processability and the quality of the films obtained with a polymer composition containing an EPDM terpolymer and an ethylene/1-octene copolymer are improved with respect to the processability and the quality of the films obtained with a polymer composition containing an EPDM terpolymer and PE or an EPR copolymer and PE.

The diene monomer in the EPDM terpolymer may be ethylidene norbornene (ENB).

As used herein, where a certain polymer is noted as being "obtained from" or "comprising", etc. one or more monomers (or monomer units) this description is of the finished polymer material itself and the repeating units therein that make up, in whole or part, this finished product. One of ordinary skill in the art understands that, speaking precisely, a polymer does not include individual, unrelated "monomers," but instead is made up of repeating units derived from reacted monomers.

All references, patents, applications, tests, standards, documents, publications, brochures, texts, articles, etc. mentioned herein are incorporated herein by reference. Similarly, all brochures, technical information sheets, etc. for all commercially available materials are incorporated herein by reference. The above description is presented to enable a person skilled in the art to make and use the invention, and is provided in the context of a particular application and its requirements. Various modifications to the preferred embodiments will be readily apparent to those skilled in the art, and the generic principles defined herein may be applied to other embodiments and applications without departing from the spirit and scope of the invention. Thus, this invention is not intended to be limited to the embodiments shown, but is to be accorded the widest scope consistent with the principles and features disclosed herein.

## Claims

1. Polymer composition comprising :
- at least one aromatic polyamide,
- at least one first elastomer comprising (i) recurring units derived from at least one acyclic olefin (O1) which comprises at most 4 carbon atoms, and (ii) recurring units derived from at least one acyclic olefin (O2) which comprises more than 6 carbon atoms, and
- at least one second elastomer and comprising recurring units derived from at least one acyclic olefin (O3) which comprises at most 4 carbon atoms, wherein the second elastomer is free of recurring units derived from an acyclic olefin which comprises more than 6 carbon atoms.

2. Polymer composition according to claim 1, **characterized in that** the aromatic polyamide is a polyterephthalamide.

3. Polymer composition according to claim 1 or 2, **characterized in that** acyclic olefm (O1) is ethylene.

4. Polymer composition according to anyone of claims 1 to 3, **characterized in that** acyclic olefin (O2) is 1-octene.

5. Polymer composition according to anyone of claims 1 to 4, **characterized in that** the first elastomer is functionalized by grafting.

6. Polymer composition according to anyone of claims 1 to 5, **characterized in that** the first elastomer is free of recurring units derived from monomers other than (O1) and (O2).

7. Polymer composition according to anyone of claims 1 to 6, **characterized in that** acyclic olefin (O3) is a mixture of ethylene and propylene.

8. Polymer composition according to anyone of claims 1 to 7, **characterized in that** the second elastomer further contains recurring units derived from at least one monomer other than (O3), said additional monomer other than (O3) being a C₅ acyclic diolefin and/or a C₆ acyclic diolefm and/or a non-conjugated cyclic diolefin.

9. Polymer composition according to claim 8, **characterized in that** the additional monomer other than (O3) is ethylidene norbornene.

10. Shaped article manufactured from the polymer composition according to anyone of claims 1 to 9, **characterized in that** it is chosen from hoses, pipes, tubings, films, filaments, fibers, tanks, blow molded articles, injection molded articles, thermoformed articles, multi-layer structures and sheets.
